(19) **Europäisches Patentamt / European Patent Office / Office européen des brevets**

(11) **EP 1 978 819 B1**

(12) **EUROPEAN PATENT SPECIFICATION**

(45) Date of publication and mention
of the grant of the patent:
**12.08.2009 Bulletin 2009/33**

(51) Int Cl.:
*A23G 9/38* (2006.01)     *A23G 9/46* (2006.01)
*B65D 83/14* (2006.01)     *B65D 85/78* (2006.01)
*B65D 83/00* (2006.01)     *A23G 3/44* (2006.01)
*A23L 2/66* (2006.01)     *A23L 2/54* (2006.01)
*A23C 9/154* (2006.01)     *A23C 9/152* (2006.01)
*A23G 1/44* (2006.01)     *A23G 9/44* (2006.01)
*A23L 1/305* (2006.01)

(21) Application number: **07702658.1**

(22) Date of filing: **05.01.2007**

(86) International application number:
**PCT/EP2007/000156**

(87) International publication number:
**WO 2007/087967 (09.08.2007 Gazette 2007/32)**

(54) **AERATED PRODUCT**

MIT LUFT DURCHSETZTES ERZEUGNIS

PRODUIT AÉRÉ

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.01.2006 EP 06250525**

(43) Date of publication of application:
**15.10.2008 Bulletin 2008/42**

(73) Proprietors:
• **Unilever PLC
London
EC4Y 0DY (GB)**
Designated Contracting States:
**CY GB IE**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventor: **COX, Andrew, Richard
Bedford Bedfordshire MK44 1LQ (GB)**

(74) Representative: **Clarke, Christopher John
Unilever Patent Group
Colworth House
Sharnbrook
Bedford MK11 1LQ (GB)**

(56) References cited:
**EP-A- 0 747 301          EP-A- 0 919 134
EP-A- 0 995 685          EP-A- 1 061 006
EP-A- 1 327 390          EP-A- 1 449 441
EP-A- 1 621 084          EP-A- 1 623 631
EP-B- 1 158 862          WO-A-00/22936
WO-A-96/41882          WO-A-20/05102067
DE-U1- 29 715 519**

• **DATABASE WPI Section Ch, Week 200444
Derwent Publications Ltd., London, GB; Class
B04, AN 2004-465457 XP002313777 & KR 2004
0018844 A (KIM J G) 4 March 2004 (2004-03-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to a product which comprises an aerated composition in a container such as a cartridge, aerosol can or collapsible pouch, from which the aerated composition is capable of being dispensed. In particular, the invention relates to products wherein the aerated composition comprises hydrophobin.

**Background to the invention**

Containers such as cartridges, aerosol cans and collapsible pouches provide a convenient, portable means of dispensing whipped cream, ice cream, mustard, ketchup, salad dressing, shaving gel, soap, toothpaste and other compositions. For example, cartridges containing ice cream are described in EP 1 449 441. The cartridge comprises a hollow body which contains a frozen aerated confection, and which has a dispensing aperture through which the frozen aerated confection is dispensed. Aerosol cans containing aerated desserts and whipped cream are for example described in EP 1 061 006. Collapsible pouches containing frozen aerated confections are for example described in WO 05 / 102067. On dispensing from the container, the composition is subject to both a shear and pressure change since the composition is forced through a nozzle or hole. As pointed out in EP 1 449 441, if the composition is aerated, the pressure exerted during extrusion compresses the composition and squeezes air from it reducing the overrun significantly. Consequently, the maximum overrun that is attainable is limited. This means that high overrun compositions are difficult to achieve. Thus there is a need for products which, when subject to such dispensing processes, do not lose significant amounts of overrun.

**Tests and definitions**

Aeration and overrun

The term "aerated composition" means that gas has been intentionally incorporated into the composition, for example by mechanical means. Aerated compositions include compositions in which gas is dissolved under pressure, and which become aerated by virtue of a solubility change induced by a release of pressure, for example, during dispensing from an aerosol can.

The gas can be any gas, but is preferably, particularly in the context of food products, a food-grade gas such as air, nitrogen, nitrous oxide, or carbon dioxide.

The extent of aeration is typically defined in terms of "overrun". In the context of the present invention, %overrun is defined as:

$$\text{Overrun} = ((\text{weight of aerated composition} - \text{weight of mix}) / \text{weight of mix}) \times 100$$

where the weights are the weights of a fixed volume of composition or mix at atmospheric pressure. For an aerated composition at elevated pressure (such as in an aerosol can), the overrun is that which is measured if the pressure is reduced to atmospheric pressure.

Overrun is measured as follows. A container of known volume is filled with un-aerated mix and weighed. The container is then emptied, cleaned, filled with aerated composition and weighed again. The overrun is calculated from the measured weights using the above equation.

**Brief description of the invention**

In our co-pending application EP 1 623 631, we have found that a fungal protein termed hydrophobin stabilises the air phase in aerated frozen confections. Hydrophobin is surface active and acts as an aerating agent, while also appearing to confer a highly viscoelastic nature to the surface of the air bubbles.

We have now found that that aerated compositions containing hydrophobin can be dispensed from a cartridge, aerosol can, collapsible pouch or the like without significant loss of overrun. Accordingly, in a first aspect the present invention provides a product comprising a container which contains an aerated composition, the container having a dispensing aperture through which the aerated composition can be dispensed, **characterized in that** the aerated composition comprises hydrophobin.

Preferably the composition comprises at least 0.001 wt% hydrophobin.

Preferably the hydrophobin is in isolated form.

Preferably the hydrophobin is a class II hydrophobin.

Preferably the aerated composition has an overrun of from 25% to 400%.

Preferably the aerated composition is an aerated food, more preferably a frozen aerated confection, most preferably an ice cream.

Preferably the container is selected from the group consisting of a cartridge, an aerosol can and a collapsible pouch. More preferably the container comprises a cartridge having hollow cylindrical body which is open at one end and closed by an end wall at the other end; a dispensing aperture in the end wall through which the aerated composition is dispensed; and a plunger which sealingly fits within the bore of the cylindrical body and which is movable within the bore of the cylindrical body towards the end wall so as to urge the aerated composition towards the dispensing aperture whereby it can be extruded through the dispensing aperture. Most preferably the end wall is in the shape of a truncated cone with the larger circular base of the cone being directly attached to the end of the cylindrical wall of the cartridge and the dispensing aperture being located in the smaller circular surface of the truncated cone.

In a preferred embodiment, the cylindrical body of the container extends outwardly beyond the end wall.

In a second aspect, the present invention provides a process for dispensing an aerated composition from a product according to the first aspect of invention; the process comprising applying pressure to the composition when the dispensing aperture is open, so as to cause the composition to be discharged from the container by extrusion through the dispensing aperture.

## Detailed description of the invention

Unless defined otherwise, all technical and scientific terms used herein have the same meaning as commonly understood by one of ordinary skill in the art (e.g. in frozen confectionery manufacture, chemistry and biotechnology). Definitions and descriptions of various terms and techniques used in frozen confectionery manufacture are found in Ice Cream, 4th Edition, Arbuckle (1986), Van Nostrand Reinhold Company, New York, NY. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology.

All percentages, unless otherwise stated, refer to the percentage by weight, with the exception of percentages cited in relation to the overrun.

To supplement this description and to contribute to a better understanding of the features of the invention, the accompanying drawings are given by way of illustration and without limitation, wherein:

Figure 1 shows a diagrammatic diametric cross-sectional view of a cartridge from which an aerated composition may be dispensed by extrusion.

Figure 2 shows photographs of foams after dispensing from an aerosol can.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$X_n$-C-$X_{5-9}$-C-C-$X_{11-39}$-C-$X_{8-23}$-C-$X_{5-9}$-C-C-$X_{6-18}$-C-$X_m$ (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$X_n$-C-$X_{1-50}$-C-$X_{0-5}$-C-$X_{1-100}$-C-$X_{1-100}$-C-$X_{1-50}$-C-$X_{0-5}$-C-$X_{1-50}$-C-$X_m$ (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The amount of hydrophobin present in the composition will generally vary depending on the composition formulation and volume of the air phase. Typically, the composition will contain at least 0.001 wt%, hydrophobin, more preferably at least 0.005 or 0.01 wt%. Typically the composition will contain less than 1 wt% hydrophobin. The hydrophobin can be from a single source or a plurality of sources e.g. the hydrophobin can be a mixture of two or more different hydrophobin polypeptides.

The hydrophobin is added in a form and in an amount such that it is available to stabilise the air phase. By the term "added", we mean that the hydrophobin is deliberately introduced into the composition for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the composition in a form such that it is capable of self-assembly at an air-liquid surface.

Typically, the hydrophobin is added to the compositions of the invention in an isolated form, typically at least partially purified, such as at least 10% pure, based on weight of solids. By "added in isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

In one embodiment, the hydrophobin is added to the composition in monomeric, dimeric and/or oligomeric (i.e. consisting of 10 monomeric units or fewer) form. Preferably at least 50 wt% of the added hydrophobin is in at least one of these forms, more preferably at least 75, 80, 85 or 90 wt%. Once added, the hydrophobin will typically undergo assembly at the air/liquid interface and therefore the amount of monomer, dimer and oligomer would be expected to decrease.

Aerated Compositions

The composition may be a food such as ice cream, sorbet, sherbet, frozen yoghurt, cream, custard, marzipan, meringue mix, cookie dough, chocolate sauce, mustard, ketchup, cheese and salad dressing; alternatively, the composition may be a non-food composition, for example shaving gel, soap and toothpaste. The composition is aerated. Thus compositions which may not normally be aerated (for example ketchup or toothpaste) must be aerated in the products of the invention.

Preferably the composition is a food, more preferably a confectionery composition. Most preferably the composition is a frozen aerated confection, such as ice cream, sorbet, sherbet and frozen yoghurt.

The temperature and / or formulation of frozen aerated confections should be chosen so that the confections are sufficiently soft to be extruded from the container without the need to exert excessive pressure on the cartridge. Some suitable formulations for extrusion at low temperatures (e.g. -18°C) are described in EP 1449441 and EP1505881. Alternatively, standard formulations may be extruded at warmer temperatures, such as -12 °C or -10°C.

Aerated food compositions within the scope of this invention may contain ingredients such as one or more of the following: other proteins such as dairy proteins, either as dry ingredients such as whey powder or skim milk powder, or as liquid ingredients, e.g. milk or cream; oil or fat, such as butter fat, coconut oil, palm oil, palm kernel oil and sunflower oil, notably in the form of an emulsified phase; sugars e.g. sucrose, fructose, dextrose, lactose, corn syrups, sugar alcohols; salts; colours and flavours; chemical emulsifiers, such as mono-/diglycerides of fatty acids, Tween, acetic acid esters of monoglycerides, lactic acid esters of monoglycerides; fruit or vegetable purees, extracts, pieces or juice; stabilisers or thickeners, such as polysaccharides, e.g. locust bean gum, guar gum, carrageenan, gellan gum, xanthan gum, microcrystalline cellulose, sodium alginate; and inclusions such as chocolate, caramel, fudge, biscuit or nuts.

Aerated non-food compositions, (in addition to hydrophobin) may include other ingredients to create the specific type of product. These include, but are non limited to:

- Anionic, cationic, and non-ionic surfactants.
- Fatty acids such as stearic and palmitic acid and fatty acids of mono- / di- or tri- glycerides.
- Acids or bases, such as hydrochloric acid and sodium hydroxide
- Preservatives, e.g. benzoic acid
- Sugar alcohols, e.g. glycerol and sorbitol
- Polymers such as PEGs and carbomer

The amount of overrun present in the aerated composition will vary depending on the desired characteristics. Preferably the amount of overrun is at least 10%, more preferably at least 25 or 50%, most preferably at least 70%. Preferably the amount of overrun is at most 400%, more preferably at most 300 or 200%, most preferably at most 150%.

Container

The container has a dispensing aperture, which can be closed by a closure means, for example a removable seal, a lid or a valve. The composition is dispensed from the container by applying a pressure to the composition when the dispensing aperture is open, so as to cause the composition to be discharged from the container by extrusion through the dispensing aperture. The pressure may be applied by a dispensing apparatus, for example if the container is a cartridge; by hand, for example if the container is a collapsible pouch, such as a toothpaste tube; or by means of stored energy, such as compressed gas, for example if the container is an aerosol can.

The dispensing aperture may be simply an aperture, or a nozzle or other constriction. It may be circular, or it may be any other shape which is deemed suitable, for example square, rectangular, triangular, oval, etc. A dispensing aperture in the form of a star with rounded vertices is particularly suitable, for example for frozen aerated confections. The composition adopts the cross-section of the dispensing aperture as it is extruded.

The container is of capacity suitable for the mass of composition it is to contain. The container may contain a single serving, so that all the contents are served in a single operation; or else the container may hold several servings.

Preferably the container is selected from the group consisting of a cartridge, an aerosol can or a collapsible pouch.

*Cartridges*

Cartridges may be of various forms, and are described for example in EP 995685, EP 1557092, EP 1478241, EP 1449441, WO 94 / 13154, WO 00 / 022936 and WO 05 / 113387.

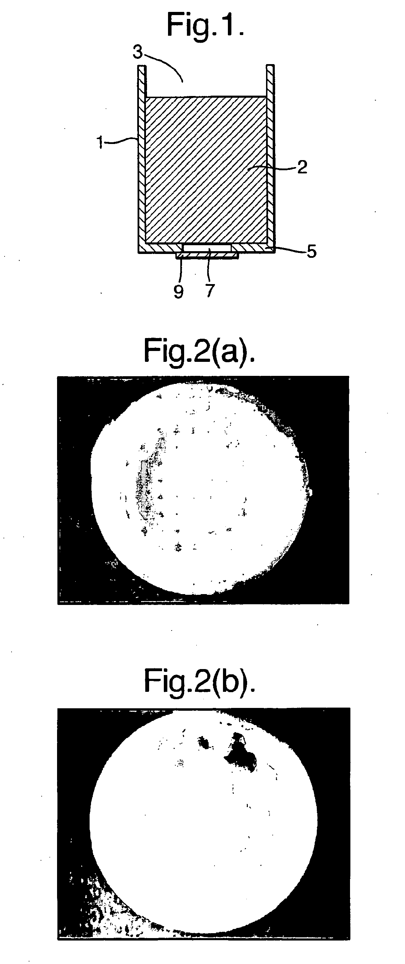

Figure 1 illustrates the general structure of a cartridge suitable for use in the present invention. The cartridge has a hollow body (1) with a bore and two ends, of which one end is open (3) and the other end is closed by an end wall (5). The hollow body may be for example cylindrical or frusto-conical; the body shown in Figure 1 is cylindrical. The hollow body (1), the end wall (5) and the open end (3) delimit a cavity wherein an aerated composition (2) is located. The end wall contains a dispensing aperture (7) through which the composition is dispensed. The cartridge is closed and sealed until its contents are to be dispensed by covering the dispensing aperture with a removable seal (9).

It is preferred that the cartridge should be disposable. The cartridge may be manufactured from a synthetic plastic material such as polypropylene.

In a first embodiment, the open end is closed by a flexible membrane sealed to the body to enclose the composition prior to dispensing. This cartridge is intended to be used in a dispensing machine in which a driving means urges the membrane towards the dispensing aperture, applying pressure to the composition and extruding it through the dispensing aperture. Cartridges of this type and the dispensing machines in which they are used are described in more detail in EP-A-0919134.

In a second embodiment the open end is closed by a plunger which sealingly fits within the bore of the hollow body, which is cylindrical. The plunger is movable within the bore of the cylindrical body towards the end wall so as to urge the composition towards the end wall whereby it can be extruded through the dispensing aperture. The plunger besides being one of the elements for sealing the pack during its storage and handling from the place of packing to the time of its consumption, is designed to receive the action of a piston of a dispensing machine when it is required to dispense the composition. Cartridges of this type and the dispensing machines in which they are used are described in more detail in EP 1449441.

Preferably, the end wall is in the shape of a truncated cone with the larger circular base of the cone being directly attached to, or formed integrally with, the end of the cylindrical wall of the cartridge and the dispensing aperture being located in the smaller circular surface of the truncated cone. The cartridge is intended to be used with a dispensing machine comprising a frustoconical support having a corresponding shape to that of the truncated conical end wall and driving means to move the plunger towards the end wall when at least a part of the frustoconical surface of the truncated conical end wall is in contact with the frustoconical support.

In a third embodiment, the cylindrical wall of the cartridge extends outwardly beyond the end wall. This cartridge is intended to be used in a dispensing machine comprising support means and driving means to move the plunger towards the end wall when the outermost end of the outwardly extending cylindrical wall is supported on the support means. Cartridges of this type and the dispensing machines in which they are used are described in more detail in WO-A-00022936.

*Aerosol cans*

Aerosol cans containing aerated compositions are for example described in EP 1061006, EP 1400486, EP 1505881 and US 2005 / 0193744. By the term "aerosol can" is meant a container provided with a valve which allows the opening and closing of a dispensing aperture, and containing a composition. The composition can be controllably closed from the container through the dispensing aperture by means of co-packed energy when the valve is opened. The co-packed energy is typically provided by a pressurized gaseous propellant, but may also be provided by other means, for example a compressed spring.

Commercially available aerosol systems include "one-compartment" containers and "two-compartment" containers. In one-compartment containers, the container is filled with a composition and gas. The gas functions both as a propellant and as an aerating agent. In the container, the gas is at least partially dissolved in the composition. When the valve is opened, the pressure forces the composition out of the container through the dispensing aperture. At the same time, the dissolved gas comes out of solution because of the pressure release, and forms bubbles thereby aerating the composition as it is dispensed. The gas may be a single gas which performs both functions. Alternatively it may comprise a mixture of two gases, one of which is soluble in the composition, and acts as the aerating agent, and one which is insoluble, and acts as the propellant, as described for example in EP 0 747 301.

Two-compartment containers are described for example in EP1 061 006. In these, the propellant is in one compartment and the composition and aerating agent are in the other. The compartments are separated from each other by a movable partition. Two-compartment containers include the "bag-in-can" system, wherein one compartment is partly formed by the space enclosed by a bag made from flexible and/or elastic material, and the "piston type" wherein one compartment is formed by the space enclosed by the wall of the aerosol can and one side of a piston. In this case, the propellant may, for example, be replaced by a compressed spring

*Collapsible pouches*

Collapsible pouches comprise a hollow body which delimits a cavity wherein an aerated composition is located and a dispensing aperture through which the composition is dispensed. The dispensing aperture can be formed for example by a suitable body secured to in the pouch. The dispensing aperture engages with a closure means, for example a lid, to close the pouch until its contents are to be dispensed. Then the closure means is opened, and pressure is applied to the outside of the pouch, for example by squeezing it manually, so that the composition is extruded through the dispensing aperture. Collapsible pouches can be made from suitable flexible material, such as plastic film or foil. Collapsible pouches include, for instance, toothpaste tubes, and are described for example in WO 05 / 102067.

**Examples**

The present invention will now be described further with reference to the following examples which are illustrative only and non-limiting.

Examples 1 and 2 and comparative example A

Frozen aerated confections according to the invention were prepared using the formulation shown in Table 1. A comparative example of a frozen aerated confection containing skimmed milk powder instead of hydrophobin was also prepared.

Table 1: Formulations

| Ingredient (wt%) | Examples 1 & 2 | Comparative example A |
|---|---|---|
| Skim Milk Powder (SMP) | - | 11 |
| Hydrophobin HFBII | 0.1 | - |
| Sucrose | 27 | 20 |
| Xanthan Gum | 0.2 | 0.2 |
| Water | 72.7 | 68.8 |

Skim milk powder contained 33-36% protein, 0.8% fat, 3.7% moisture and was obtained from United Milk, UK. Hydrophobin HFBII was obtained from VTT Biotechnology, Finland. It had been purified from *Trichoderma reesei* essentially as described in WO00/58342 and Linder et al., 2001, Biomacromolecules 2: 511-517.Sucrose was obtained from Tate and Lyle. Xanthan gum (Keltrol RD cold dispersible) was obtained from CP Kelco.

*Mix preparation*

The dry ingredients, i.e. sucrose, xanthan gum and SMP (where present) were blended and added slowly into stirred water at room temperature. The solutions were subsequently heated with continuous stirring to approximately 40°C and then allowed to cool to room temperature with stirring over a period of one hour to ensure that the SMP (where present) and xanthan were properly dispersed and hydrated. The required concentration of HFB II (where present) was added as an aliquot, and the solution briefly stirred. The solution was then gently sonicated in a sonic bath for 30 seconds to fully disperse the HFB II. The mixes were then stored at 5°C.

*Preparation of frozen aerated confections*

Three frozen aerated confections were prepared as follows. 80 mL of mix was aerated and frozen simultaneously in a stirred pot apparatus which consists of a cylindrical, vertically mounted, jacketed stainless steel vessel with internal dimensions of height 105mm and diameter 72mm. The rotor used to shear the sample consisted of a rectangular impeller of the correct dimensions to scrape the inner surface of the vessel as it rotates (72mm x 41.5mm). Also attached to the rotor are two semi-circular (60mm diameter) high-shear blades positioned at a 45° angle to the rectangular impeller. The apparatus is surrounded by a metal jacket connected to a circulating cooling bath (Lauda Kryomat RVK50). This allows control of the wall temperature.

For Example 1 and comparative example A, freezing and aeration was conducted as follows. The stirred pot vessel was chilled to 5°C and the mix was poured into it. The coolant temperature was set to -25°C but the circulation was turned off so that there was no significant flow of cooling liquid through jacket. The mix was sheared at 100 rpm; after 15 seconds the circulation was switched on so that the coolant flowed through the jacket, cooling the equipment and mix. After a further 45 seconds the rotor speed was increased to 1000 rpm for 2 minutes, and then reduced to 300 rpm until the aerated mix reached -5°C, at which point the rotor was stopped and the frozen aerated confection was removed from the vessel.

For Example 2 a slightly different procedure was used. This procedure was designed to have slower freezing, i.e. more time for aeration before freezing, with the aim of producing a higher overrun. The stirred pot vessel was chilled to 5°C and the mix was poured into it. The coolant temperature was set to -18°C but the circulation was turned off so that there was no significant flow of cooling liquid through the jacket. The mix was sheared at 100 rpm; after 15 seconds the circulation was switched on so that the coolant flowed through the jacket, cooling the equipment and mix. After a further 45 seconds the rotor speed was increased to 1000 rpm for 1 minute, then reduced to 700 rpm for 1 minute, followed by 500 rpm for one minute and finally 300 rpm until the aerated mix reached -5°C, at which point the rotor was stopped and the frozen aerated confection was removed from the vessel.

*Measurement of Overrun*

After aeration and freezing, the overrun of the frozen aerated confections was measured as follows. A plastic container of known volume was filled with the un-aerated, unfrozen mix and weighed. The container was then emptied, cleaned and filled with frozen aerated confection and weighed again. The overrun was calculated from the measured weights using the equation given above.

*Preparation of frozen aerated products*

The frozen aerated confections were placed in cartridges of the second embodiment described above, i.e. cylindrical bodies wherein the open end is closed by a movable plunger and the end wall containing the dispensing aperture is in the shape of a truncated cone. The cylinder had internal diameter of 4.8cm and length 9.7cm, and the dispensing aperture had an area of 2.2 cm$^2$. The cartridge contained approximately 100 ml of frozen aerated confection. The cartridges had been pre-cooled by surrounding them in solid carbon dioxide for 5 minutes to prevent melting of the frozen confection during filling. The filled cartridges were stored in a -80°C freezer.

*Dispensing*

Each frozen product was tempered to -10°C for 24 hours before testing. They were then dispensed from the cartridges using a commercial cartridge dispensing apparatus (Cornetto Soft™, Walls). The overrun of the dispensed frozen aerated confection was then measured (using the procedure described above) and compared to the overrun prior to dispensing. The results are shown in Table 2.

Table 2: Overrun of examples before and after dispensing.

| Overrun (%) | Example 1 | Example 2 | Comparative example A |
|---|---|---|---|
| Before dispensing | 61 | 94 | 103 |
| After dispensing | 62 | 88 | 80 |

Comparative example A lost a substantial amount of overrun (more than 20%) on dispensing. In contrast, for Examples 1 and 2 which contain hydrophobin, the amount of overrun lost on dispensing was dramatically reduced.

Example 3 and comparative example B

Example 3, a frozen aerated confection according to the invention was prepared using the formulation shown in Table 3. Comparative example B, a frozen aerated confection containing skimmed milk powder instead of hydrophobin was also prepared.

Table 3: Formulations

| Ingredient (wt%) | Example 3 | Comparative example B |
|---|---|---|
| Skim Milk Powder (SMP) | - | 10 |
| Hydrophobin HFBII | 0.1 | - |
| Sucrose | 11.2 | 1.2 |
| Dextrose | 16.7 | 16.7 |
| Corn syrup | 10.3 | 10.3 |
| Locust bean Gum | 0.4 | 0.2 |
| Water | 61.3 | 61.6 |

Dextrose was supplied by Cerestar as a monohydrate. The corn syrup was C*Trusweet 017Y4, with a DE of 63, obtained from Cerestar, UK. Locust bean gum was obtained from Danisco.

*Mix preparation*

The dry ingredients, i.e. dextrose, sucrose, locust bean gum and SMP (where present) were blended and added slowly into a mixture of the corn syrup and water with stirring at room temperature. The mix was subsequently heated to 80°C on a hot plate, and then cooled to and stored at 5°C. The required concentration of HFB II (where present) was added as an aliquot after cooling.

*Preparation of frozen aerated products*

The mixes were aerated and frozen on the stirred pot apparatus with the coolant at -18°C, as described above, but using the following shearing regimes: example 3 - 100rpm for 1 minute, then 1000rpm for 5 minutes, then 300 rpm for 2 minutes, finally 700rpm for 8 minutes; comparative example B - 100rpm for 1 minute, then 1000rpm for 5 minutes, finally 300 rpm for 4 minutes. An overrun of approximately 100% was obtained for each sample (termed the initial overrun before pressurisation). The frozen aerated composition was then decanted into piston pack aluminium aerosol cans with a 210 ml brim-fill capacity (CCL Container, Ontario, Canada). The cans were crimped and pressurised to 6.5 bar g with air. Valves were fitted (4.8 mm internal diameter stem having 2 orifices of $3.2 \times 4.6$ mm, obtained from Precision Valves, Peterborough, UK). The foams were stored at -20°C for 5 days.

*Dispensing*

The frozen aerated compositions were dispensed from the aerosol cans and their overruns were measured after dispensing. At least 2 dispenses were made from each can. These data are shown in Table 4.

Table 4 Overrun measurements.

| Overrun (%) | Initial* | Dispense 1 | Dispense 2 | Dispense 3 |
|---|---|---|---|---|
| Example 3 | 89 | 66 | 66 | 72 |
| Comparative example B | 112 | 25 | 28 | |
| * i.e. before pressurisation in the can | | | | |

The overrun loss on dispensing was much smaller for example 3 (the foam stabilised with hydrophobin) than for comparative example B (the foam stabilised with milk protein). Thus the hydrophobin-stabilised frozen foam is much more stable to the high shear and simultaneous pressure drop during dispensing from an aerosol can than a similar foam stabilised with milk protein.

Example 4 and comparative example C

Example 4, a chilled aerated confection according to the invention was prepared using the formulation shown in Table 5. Comparative example C, a chilled aerated confection containing skimmed milk powder instead of hydrophobin was also prepared.

Table 5: Formulations

| Ingredient (wt%) | Example 4 | Comparative example C |
|---|---|---|
| Skim Milk Powder (SMP) | - | 10 |
| Hydrophobin HFBII | 0.1 | - |
| Sucrose | 30 | 20 |
| Xanthan Gum | 0.5 | 0.5 |
| Water | 69.4 | 69.5 |

*Mix preparation*

The dry ingredients, i.e. sucrose, xanthan gum and SMP (where present) were blended and added slowly into the water with stirring at room temperature, for at least 20 minutes to allow the xanthan and SMP (where present) to hydrate. The mix was then cooled to and stored at 5°C. The required concentration of HFB II (where present) was added as an aliquot after cooling.

*Preparation of chilled aerated products*

The mix of example 4 was aerated to an overrun of about 100% using a Breville mixer. The mix of comparative example C was aerated using a Hobart mixer (Model N50CE) for 1 minute 30 seconds (speed setting 3) to obtain an overrun of 100%. The foams were then decanted into aerosol cans as described above and pressurised to 6.5 bar g with air. The foams were stored at 5°C for 5 days before dispensing.

*Dispensing*

The chilled aerated compositions were dispensed from the aerosol cans and their overruns were measured after dispensing. At least 3 dispenses were made from each can, and the mean overrun after dispensing was calculated. These data are shown in Table 6.

Table 6 Overrun measurements.

| Overrun (%) | Initial* | Dispense 1 | Dispense 2 | Dispense 3 | Mean |
|---|---|---|---|---|---|
| Example 4 | 100 | 85 | 88 | 89 | 87 |
| Comparative example C | 100 | 71 | 74 | 87 | 77 |
| * i.e. before pressurisation in the can | | | | | |

The overrun loss on dispensing was significantly smaller for example 4 (the foam stabilised with hydrophobin) than for comparative example C (the foam stabilised with milk protein). Figure 2 shows photographs of foams that had been dispensed into pots for (a) example 4 and (b) comparative example C. Some very large bubbles can be seen in the foam of comparative example C. The foam of example 4 was much whiter in appearance (indicating a smaller air bubble size) and only a very few air bubbles were visible to the naked eye. The ring on the surface of the foams is an indentation caused by the pot lids; it is more apparent for example 4 as the air bubbles are smaller so the surface of the foam is smoother.

Thus the hydrophobin-stabilised chilled foam is more stable to the high shear and simultaneous pressure drop during dispensing from an aerosol can than a similar foam stabilised with milk protein.

# EP 1 978 819 B1

## Claims

1. A product comprising a container which contains an aerated composition, the container having a dispensing aperture through which the aerated composition can be dispensed, **characterized in that** the aerated composition comprises hydrophobin.

2. A product according to claim 1 wherein the composition comprises at least 0.001 wt% hydrophobin.

3. A product according to claim 1 or claim 2 wherein the hydrophobin is in isolated form.

4. A product according to any one of claims 1 to 3 wherein the hydrophobin is a class II hydrophobin.

5. A product according to any one of the preceding claims wherein the aerated composition has an overrun of from 25% to 400%.

6. A product according to any one of the preceding claims wherein the aerated composition is an aerated food.

7. A product according to claim 6 wherein the aerated composition is a frozen aerated confection.

8. A product according to claim 7 wherein the aerated composition is an ice cream.

9. A product according to any one of the preceding claims wherein the container is selected from the group consisting of a cartridge, an aerosol can and a collapsible pouch.

10. A product according to claim 9 wherein the container comprises a cartridge having hollow cylindrical body which is open at one end and closed by an end wall at the other end; a dispensing aperture in the end wall through which the aerated composition is dispensed; and a plunger which sealingly fits within the bore of the cylindrical body and which is movable within the bore of the cylindrical body towards the end wall so as to urge the aerated composition towards the dispensing aperture whereby it can be extruded through the dispensing aperture.

11. A product according to claim 10 wherein the end wall is in the shape of a truncated cone with the larger circular base of the cone being directly attached to the end of the cylindrical wall of the cartridge and the dispensing aperture being located in the smaller circular surface of the truncated cone.

12. A product according to claim 10 or claim 11 wherein the cylindrical body of the container extends outwardly beyond the end wall.

13. A process for dispensing an aerated composition from a product according to any one of claims 1 to 12, the process comprising applying pressure to the composition when the dispensing aperture is open, so as to cause the composition to be discharged from the container by extrusion through the dispensing aperture.

## Patentansprüche

1. Produkt, das einen Behälter umfasst, welcher eine geschäumte Zusammensetzung umfasst, wobei der Behälter eine Abgabeöffnung hat, durch die die geschäumte Zusammensetzung abgegeben werden kann, **dadurch gekennzeichnet, dass** die geschäumte Zusammensetzung Hydrophobin umfasst.

2. Produkt gemäß Anspruch 1, wobei die Zusammensetzung wenigstens 0,001 Gewichts-% Hydrophobin umfasst.

3. Produkt gemäß Anspruch 1 oder Anspruch 2, wobei das Hydrophobin in isolierter Form ist.

4. Produkt gemäß einem der Ansprüche 1 bis 3, wobei das Hydrophobin ein Klasse II-Hydrophobin ist.

5. Produkt gemäß einem der vorangehenden Ansprüche, wobei die geschäumte Zusammensetzung einen Aufschlag von 25 % bis 400 % hat.

6. Produkt gemäß einem der vorangehenden Ansprüche, wobei die geschäumte Zusammensetzung ein geschäumtes Nahrungsmittel ist.

7. Produkt gemäß Anspruch 6, wobei die geschäumte Zusammensetzung ein gefrorenes geschäumtes Konfekt ist.

8. Produkt gemäß Anspruch 7, wobei die geschäumte Zusammensetzung Eiscreme ist.

9. Produkt gemäß einem der vorangehenden Ansprüche, wobei der Behälter ausgewählt ist aus der Gruppe, bestehend aus einer Patrone, einer Aerosoldose und einem zusammendrückbaren Beutel.

10. Produkt gemäß Anspruch 9, wobei der Behälter eine Patrone umfasst, die einen hohlen zylindrischen Körper, der an einem Ende offen ist und an dem anderen Ende durch eine Endwand geschlossen ist; eine Abgabeöffnung in der Endwand, durch die die geschäumte Zusammensetzung abgegeben wird, und einen Kolben, der sich dicht in die Bohrung des zylindrischen Körpers einpasst und der innerhalb der Bohrung des zylindrischen Körpers in Richtung der Endwand beweglich ist, um so die geschäumte Zusammensetzung in Richtung der Abgabeöffnung zu drücken, wodurch sie durch die Abgabeöffnung extrudiert werden kann, umfasst.

11. Produkt gemäß Anspruch 10, wobei die Endwand in der Form eines Kegelstumpfs ist, wobei die größere kreisförmige Basis des Kegels direkt an dem Ende der zylindrischen Wand der Patrone befestigt ist und die Abgabeöffnung in der kleineren kreisförmigen Oberfläche des Kegelstumpfs lokalisiert ist.

12. Produkt gemäß Anspruch 10 oder Anspruch 11, wobei der zylindrische Körper des Behälters sich nach außen über die Endwand hinaus erstreckt.

13. Verfahren zum Abgeben einer geschäumten Zusammensetzung aus einem Produkt gemäß einem der Ansprüche 1 bis 12, wobei das Verfahren Anwenden von Druck auf die Zusammensetzung, wenn die Abgabeöffnung offen ist, um zu bewirken, dass die Zusammensetzung durch Extrusion durch die Abgabeöffnung aus dem Behälter ausgetragen wird, umfasst.

**Revendications**

1. Produit comprenant un récipient qui contient une composition aérée, le récipient ayant une ouverture distributrice par l'intermédiaire de laquelle la composition aérée peut être distribuée, **caractérisé en ce que** la composition aérée comprend de l'hydrophobine.

2. Produit selon la revendication 1, dans lequel la composition comprend au moins 0,001 % en poids d'hydrophobine.

3. Produit selon la revendication 1 ou la revendication 2, dans lequel l'hydrophobine est sous forme isolée.

4. Produit selon l'une quelconque des revendications 1 à 3, dans lequel l'hydrophobine est une hydrophobine de classe II.

5. Produit selon l'une quelconque des revendications précédentes, dans lequel la composition aérée a un foisonnement de 25 % à 400 %.

6. Produit selon l'une quelconque des revendications précédentes, dans lequel la composition aérée est un aliment aéré.

7. Produit selon la revendication 6, dans lequel la composition aérée est une confiserie aérée glacée.

8. Produit selon la revendication 7, dans lequel la composition aérée est une crème glacée.

9. Produit selon l'une quelconque des revendications précédentes, dans lequel le récipient est choisi dans l'ensemble constitué par une cartouche, un bidon aérosol et une poche compressible.

10. Produit selon la revendication 9, dans lequel le récipient comprend une cartouche ayant un corps cylindrique creux qui est ouvert à une extrémité et fermé par une paroi d'extrémité à l'autre extrémité ; une ouverture distributrice dans la paroi d'extrémité, à travers laquelle la composition aérée est distribuée ; et un plongeur qui s'ajuste de manière étanche à l'intérieur de l'alésage du corps cylindrique et qui est mobile à l'intérieur de l'alésage du corps cylindrique en direction de la paroi d'extrémité de façon à pousser la composition aérée en direction de l'ouverture distributrice, grâce à quoi elle peut être extrudée à travers l'ouverture distributrice.

11. Produit selon la revendication 10, dans lequel la paroi d'extrémité a la forme d'un cône tronqué, la base circulaire plus large du cône étant directement attachée à l'extrémité de la paroi cylindrique de la cartouche, et l'ouverture distributrice étant localisée dans la surface circulaire plus petite du cône tronqué.

12. Produit selon la revendication 10 ou la revendication 11, dans lequel le corps cylindrique du récipient s'étend vers l'extérieur au-delà de la paroi d'extrémité.

13. Procédé pour distribuer une composition aérée à partir d'un produit selon l'une quelconque des revendications 1 à 12, le procédé comprenant l'application d'une pression à la composition quand l'ouverture distributrice est ouverte, de façon à provoquer l'évacuation de la composition à partir du récipient par extrusion par l'intermédiaire de l'ouverture distributrice.

## Fig.1.

## Fig.2(a).

## Fig.2(b).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1449441 A
- EP 1061006 A
- WO 05102067 A
- EP 1623631 A
- WO 0174864 A
- WO 9641882 A
- WO 0157076 A
- EP 1505881 A
- EP 995685 A
- EP 1557092 A

- EP 1478241 A
- WO 9413154 A
- WO 00022936 A
- WO 05113387 A
- EP 0919134 A
- EP 1400486 A
- US 20050193744 A
- EP 0747301 A
- WO 0058342 A

### Non-patent literature cited in the description

- **Arbuckle.** Ice Cream. Van Nostrand Reinhold Company, 1986
- **Sambrook et al.** Molecular Cloning: A Laboratory Manual. Cold Spring Harbor Laboratory Press, 2001
- **Ausubel et al.** Short Protocols in Molecular Biology. John Wiley & Sons, Inc, 1999
- **Wessels.** *Adv. Microb. Physio.,* 1997, vol. 38, 1-45
- **Wosten.** *Annu Rev. Microbiol.,* 2001, vol. 55, 625-646
- **De Vocht et al.** *Biophys. J.,* 1998, vol. 74, 2059-68
- **Wosten et al.** *Embo. J.,* 1994, vol. 13, 5848-54

- **Talbot.** *Curr. Biol,* 2003, vol. 13, R696-R698
- **MacCabe ; Van Alfen.** *App. Environ. Microbiol,* 1999, vol. 65, 5431-5435
- **Collen et al.** *Biochim Biophys Acta,* 2002, vol. 1569, 139-50
- **Calonje et al.** *Can. J. Microbiol.,* 2002, vol. 48, 1030-4
- **Askolin et al.** *Appl Microbiol Biotechnol.,* 2001, vol. 57, 124-30
- **De Vries et al.** *Eur J Biochem.,* 1999, vol. 262, 377-85
- **Linder et al.** *Biomacromolecules,* 2001, vol. 2, 511-517